# EUROPEAN PATENT APPLICATION

(11) **EP 3 633 069 A1**
(43) Date of publication of application: **08.04.2020**
(21) Application number: 17848203.0
(22) Date of filing: 02.06.2017
(51) Int. Cl.: C25B 1/02, C25B 1/04, C25B 9/18

(54) **2 MW HYDROGEN GENERATOR HOUSED IN A CONTAINER**

(71) Applicant: H2B2 Electrolysis Technologies, S.L., 28010 Madrid (ES)
(72) Inventor: MESA VÉLEZ-BRACHO, Verónica, 28010 Madrid (ES); MAYNAR MUÑOZ, María, 28010 Madrid (ES); GARCÍA GÓMEZ, Covadonga, 28010 Madrid (ES); CASTRO ROSENDE, África, 28010 Madrid (ES)
(74) Representative: Monzón de la Flor, Luis Miguel
(86) International application number: PCT/ES2017/070397
(87) International publication number: WO 2018/046781

(57) **Abstract**

Generator housed in a 40 foot container (12.192 m) housing therein: a first stack (1) and a second stack (2) electrically connected in series, a single oxygen separator unit (3), a hydrogen separator (4), a purification unit (5), a rectifier (6) and a general control panel (8) all of them for the two stacks (1) and (2), whilst it externally comprises three unit heaters (9), one for the deionization unit and two for the recirculation pumps which have one per stack (1) and (2). It manages to produce up to 400 Nm³/h at 40 barg of pressure in a single module, easy to transport and integrate in its final location, reducing operating costs.

## Description

### OBJECT OF THE INVENTION

The object of the present invention, as established by the title of the invention, is a 2 MW hydrogen generator housed in a container, preferably in a 40 foot container (12.192 metres) from an electrical connection in series of two 1 MW electrolyser stacks which can produce up to 400 Nm³/h.

The present invention is characterized in that it has a special configuration and distribution of the necessary equipment, so that it optimises hydrogen production in the shortest possible period of time.

Therefore, the present invention is included in the field of hydrogen generators, and particularly those housed in containers.

### BACKGROUND OF THE INVENTION

In the state of the art, not many developments are known to house hydrogen generators within containers. Some documents related to the state of the art would be patent US2009115190 which discloses a vessel shipping container to house a hydrogen storage tank, but not an electrolyser.

There are developments that allow housing stacks in containers, but in no case do they have a capacity of 2MW, being possible to house them in 40-foot containers (12.192 metres), since space requirements are much greater.

Therefore, it is the object of the present invention to develop a 2MW hydrogen generator housed in a container, preferably a 40-foot shipping container (12.192 m), developing a generator such as that described below, and which is essentially set down in claim one.

### DESCRIPTION OF THE INVENTION

An object of the present invention is a 2MW hydrogen generator housed in a container that seeks to resolve the difficulty of being able to house the necessary elements to produce up to 400 Nm³/h in a container.

The units are grouped to cover with a single unit of each one of them the needs of the two hydrogen stacks of 1 MW each. It is endeavoured to group the following units: oxygen separator, hydrogen separator, heat exchanger, unit heaters, cooler, deionization resins, water pumps (circulation and deionization) and hydrogen purification system (catalytic recombiner and dryers) for the two stacks.

With regards to the electrical equipment, a single rectifier is used for the two MW stacks and a single electric panel (motor control panel, general low voltage control panel).

The actions which are performed to achieve the purposes sought are:
- Reduction in the number of oxygen and hydrogen separators, using a single oxygen separator and a single hydrogen separator for the two stacks instead of an oxygen and hydrogen separator for each stack.
- Reduction in the purification system from two dryers and a catalytic reactor for each stack to a single catalytic reactor and two dryers for the two stacks.
- Reduction in the number of rectifiers from two, one for each stack, to one for the two stacks connected in series.
- Reduction in the number of deionization pumps from one for each stack to a single pump for the two stacks, the same as with the deionization resin tank, which instead of one for each stack is optimized to a single tank for the two stacks.
- Reduction in the number of unit heaters, instead of four unit heaters three unit heaters are included (one for the deionization circuit and two for the recirculation pumps there are for each stack).

Thanks to the characteristics described, up to 400 Nm³/h can be produced at 40 barg of pressure in a single module, easy to transport and integrate in its final location.

The operating costs are also improved, since the units reduce their costs (the cost of a unit with double the capacity is not necessarily the cost of the original equipment multiplied by two).

Unless indicated otherwise, all the technical and scientific elements used in the present specification have the meaning typically understood by the normal person skilled in the art to which this invention belongs. In the practice of the present invention, it is possible to use processes or materials which are similar or equivalent to those described in the specification.

Throughout the description and the claims the word "comprises" and its variants are not intended to exclude other technical characteristics, additives, components or steps. For people skilled in the art, other objects, advantages and characteristics of the invention will be inferred in part from the description and in part from the practice of the invention.

### EXPLANATION OF THE FIGURES

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented.

In figure 1, it can be observed a perspective representation of the hydrogen generator object of the invention.

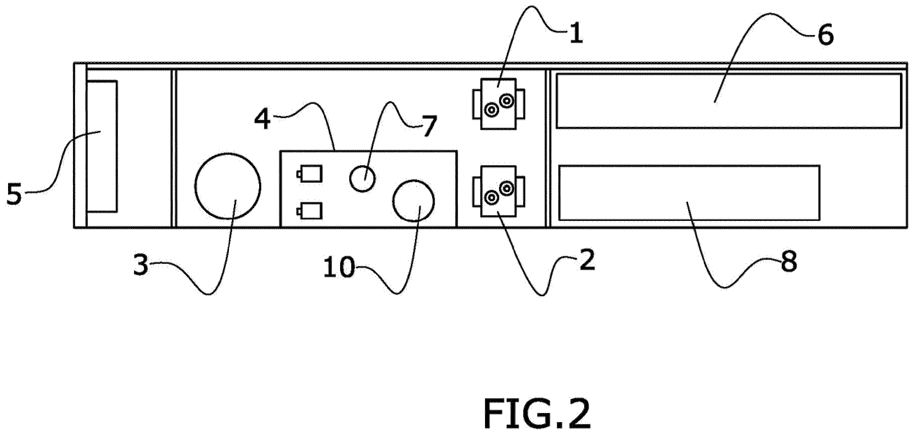

In figure 2, it can be observed a plan view of the previous figure where the number and location of each one of the units can also be observed.

### PREFERRED EMBODIMENT OF THE INVENTION.

A preferred embodiment of the proposed invention is described below in light of the figures.

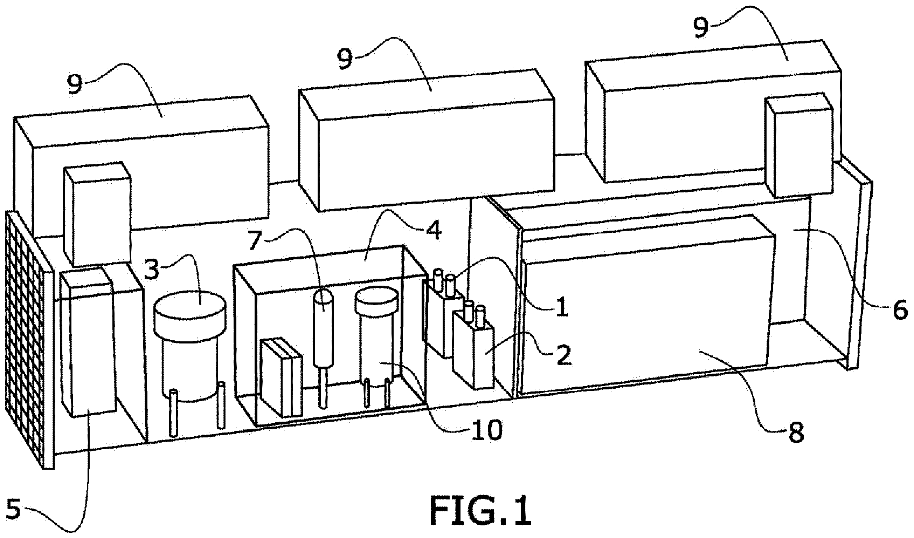

In figure 1, it can be observed that the 2MW generator object of the invention housed in a container comprises therein:
- a first stack (1) and a second stack (2) electrically connected in series
- a single oxygen separator unit (3)
- a hydrogen separator (4) for the two stacks
- a purification unit (5) for the two stacks
- a rectifier (6) for the two stacks
- a general control panel (8)

It also has a single deionization pump (7) and a single resin tank (10) for the two stacks (1) and (2).

The purifier (5) has a single catalytic reactor and two dryers.

On the other hand, it externally has three unit heaters (9), one for the deionization unit and two for the recirculation pumps which there are one per stack (1) and (2).

Having sufficiently described the nature of the present invention, as well as the manner of putting it into practice, it is stated that within its essential nature, it can be put into practice in other forms of embodiment that differ in details from those indicated by way of example, and whereto protection claimed will equally cover, provided that its main principle is not altered, changed or modified.

## Claims

1. 2MW hydrogen generator housed in a container, **characterized in that** the container is a 40 foot container (12.192 m) housing therein:
- a first stack (1) and a second stack (2) connected in series
- a single oxygen separator unit (3) for the two stacks
- a hydrogen separator (4) for the two stacks
- a purification unit (5) for the two stacks.
- a rectifier (6) for the two stacks
- a general control panel (8)
whilst it externally comprises three unit heaters (9), one for the deionization unit, and two for the recirculation pumps which have one per stack (1) and (2).

2. 2MW hydrogen generator housed in a container according to claim 1, **characterized in that** it has a single deionization pump (7) and a single resin tank (10) for the two stacks (1) and (2).

3. 2MW hydrogen generator housed in a container according to claim 1 or 2, **characterized in that** the purifier (5) has a single catalytic reactor and two dryers.
